# EUROPÄISCHE PATENTSCHRIFT

(11) **EP 3 106 738 B1**
(45) Veröffentlichungstag und Bekanntmachung des Hinweises auf die Patenterteilung: **11.10.2017**
(21) Anmeldenummer: 15172559.5
(22) Anmeldetag: 17.06.2015
(51) Int. Cl.: F16P 3/02, F16P 3/16, E05F 15/48

(54) **VORRICHTUNG ZUR BEWEGUNG UND ARRETIERUNG EINER TÜR**
DEVICE FOR MOVING AND FASTENING A DOOR
DISPOSITIF DESTINE A DEPLACER ET A ARRETER UNE PORTE

(43) Veröffentlichungstag der Anmeldung: 21.12.2016
(73) Patentinhaber: Strasser Maschinenbau GmbH, 88276 Berg/Ravensburg (DE)
(72) Erfinder: Strasser, Karl-Heinz, 88276 Berg/Ravensburg (DE)
(74) Vertreter: Engelhardt & Engelhardt

(56) Entgegenhaltungen:
- EP-A1- 2 848 854
- EP-B1- 2 562 464
- DE-U1-202014 008 457

## Beschreibung

Die Erfindung bezieht sich auf eine Vorrichtung zur Bewegung und Arretierung einer Tür nach dem Oberbegriff des Patentanspruches 1.

Durch die EP 2 562 464 B1 ist eine solche Vorrichtung bekannt geworden, durch die insbesondere der Arbeitsbereich einer Werkzeugmaschine während des Bearbeitungsvorganges gesichert ist, so dass die Arbeitsstelle während der Bearbeitungsvorgänge nach außen gekappselt ist. Solche Vorrichtungen dienen insbesondere als Schutzmaßnahme, um Verletzungen bei dem Bedienpersonal zu verhindern, um Fremdgegenstände den Eintritt in den Arbeitsbereich auszuschließen oder um Personen, die beispielsweise einen Aufzug oder einen Zug betreten wollen, vor Verletzungen zu schützen, wenn die Schiebetüren zugehen. Im Wesentlichen soll die Schiebetür zwar den Arbeitsbereich oder den Zutrittsbereich öffnen und verschließen, jedoch soll gleichzeitig gewährleistet sein, dass während der Zustellbewegung der Tür eine Verletzungsgefahr oder ein Verklemmen bzw. Beschädigen der Tür ausgeschlossen ist. Zudem soll die Bewegungsgeschwindigkeit der Tür möglichst groß sein, um Zeit zu sparen.

Zu diesem Zweck weist die Vorrichtung ein Sperrglied auf, das entlang einer parallel zu den Profilschienen angeordneten Führungssäule beim Verstellen der Tür entlangfährt. An der Unterkante der Tür ist eine Kontaktleiste vorgesehen, die dazu dient, den Sperrmechanismus mit der Führungssäule trieblich zu verbinden, sobald ein Fremdgegenstand in den Bewegungsbereich der Tür gelangt. Die Kontaktleiste ist somit trieblich mit dem Sperrglied verbunden. Sobald die Kontaktleiste ausgelöst ist, verkantet sich das Sperrglied an der Führungssäule und arretiert demnach die Tür, so dass deren Zustellbewegung gestoppt ist.

Solche Vorrichtungen zur Bewegung und Arretierung einer Tür als Schutzmaßnahme vor Arbeitsstellen, an einer Werkzeugmaschine, an Schiebetüren im Eingangsbereich eines Zuges oder Liftes oder dergleichen, haben sich in der Praxis zwar bewährt, es hat sich jedoch nachteiligerweise herausgestellt, dass die Türen mit einer möglichst hohen Bewegungsgeschwindigkeit zu verfahren sind, so dass die Arretierung der Tür in einem möglichst kurz bemessenen Zeitintervall zu erreichen ist. Darüberhinaus ist es oftmals notwendig, möglichst groß bemessene Türen zu verwenden, an deren Stirnseite dann eine lange Kontaktleiste anzubringen ist. Je länger eine solche Kontaktleiste baut, desto schwerer ist diese. Dies bedeutet, dass die Trägheitsmasse der Kontaktleiste während des Auslösevorganges zu überwinden ist. Wenn jedoch die Trägheitsmasse der Kontaktleiste groß ist, dann werden erhebliche Beschleunigungskräfte erforderlich, um diese aus der Ruheposition in ihre Auslöseposition zu überführen.

Der Erfindung liegt daher die Aufgabe zugrunde, eine Vorrichtung zur Bewegung und Arretierung einer Tür der eingangs genannten Gattung zur Verfügung zu stellen, die eine möglichst groß bemessene Zustellgeschwindigkeit aufweist und gleichzeitig einen zuverlässigen und sicheren Auslösemechanismus zur Arretierung der Tür besitzt.

Diese Aufgaben sind erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass die Kontaktleiste aus mehreren voneinander räumlich getrennten Teilabschnitten gebildet ist, dass zwischen den Teilabschnitten der Kontaktleiste und dem Sperrglied eine Welle vorgesehen ist, die in kraftschlüssiger oder formschlüssiger Wirkverbindung mit jedem der Teilabschnitte der Kontaktleiste und dem Sperrglied stehen, ist erreicht, dass bei der Aktivierung der Kontaktleiste lediglich ein bestimmter Teilabschnitt zu bewegen ist, so dass die zu bewegende Trägheitsmasse der Kontaktleiste erheblich reduziert ist, denn die einzelnen Teilabschnitte der Kontaktleiste weisen ein wesentlich geringeres Eigengewicht auf, als die gesamte Kontaktleiste. Aufgrund der Vereinzelung der Kontaktleiste in eigenständig und selbstständig auslösenden Teilabschnitten ist eine zuverlässige Sicherheitsfunktion gewährleistet, da die einzelnen Teilabschnitte trieblich mit der Sperreinrichtung verbunden sind, so dass die Schiebetür arretiert ist, sobald ein Teilabschnitt der Kontaktleiste auslöst.

Die triebliche Wirkverbindung zwischen den einzelnen Teilabschnitten der Kontaktleiste und der Sperreinrichtung ist über eine Welle erreicht, die sich über die gesamte Unterkante oder Stirnseite der Schiebetür erstreckt und mittels Nocken und an der Welle angeformte Gegennocken mit dem jeweiligen Teilabschnitt der Kontaktleiste zusammenwirkt und beim Anheben einer der Kontaktleisten in eine Drehbewegung überführt ist, durch die die Sperreinrichtung verschwenkt ist, so dass die Stoppeinrichtung an der Führungssäule festgesetzt ist und damit die Schiebetür unverzüglich fixiert und stoppt.

In der Zeichnung ist ein erfindungsgemäßes Ausführungsbeispiel dargestellt, das nachstehend näher erläutert ist. Im Einzelnen zeigt:
- Figur 1: eine Vorrichtung mit einer Schiebetür, die an zwei Profilschienen verfahrbar gelagert ist und mit einer Vielzahl von eine Kontaktleiste bildenden vereinzelten Teilabschnitten an der Unterkante der Schiebetür, in perspektivischer Ansicht,
- Figur 2: die Vorrichtung gemäß Figur 1 als vergrößerte Darstellung in einem Bereich der Schiebtür und einer der Profilschienen,
- Figur 3: die Vorrichtung gemäß Figur 2 entlang der Schnittlinie III-III,
- Figur 4: die Vorrichtung gemäß Figur 1 in einem Teilausschnitt zur Darstellung der trieblichen Wirkverbindung zwischen den einzelnen Teilabschnitten der Kontaktleiste und einer an der Unterkante der Schiebtür angebrachten Welle, in einer ersten Ausführungsvariante und
- Figur 5: einen Teilabschnitt der Kontaktleiste und einer an der Unterseite der Schiebertür angebrachte Welle, in einer zweite Ausführungsvariante.

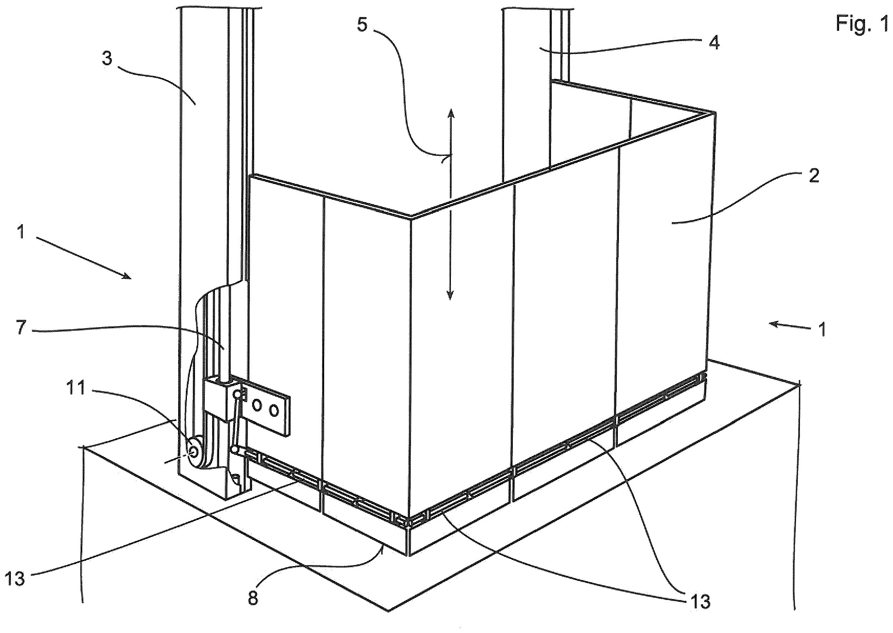

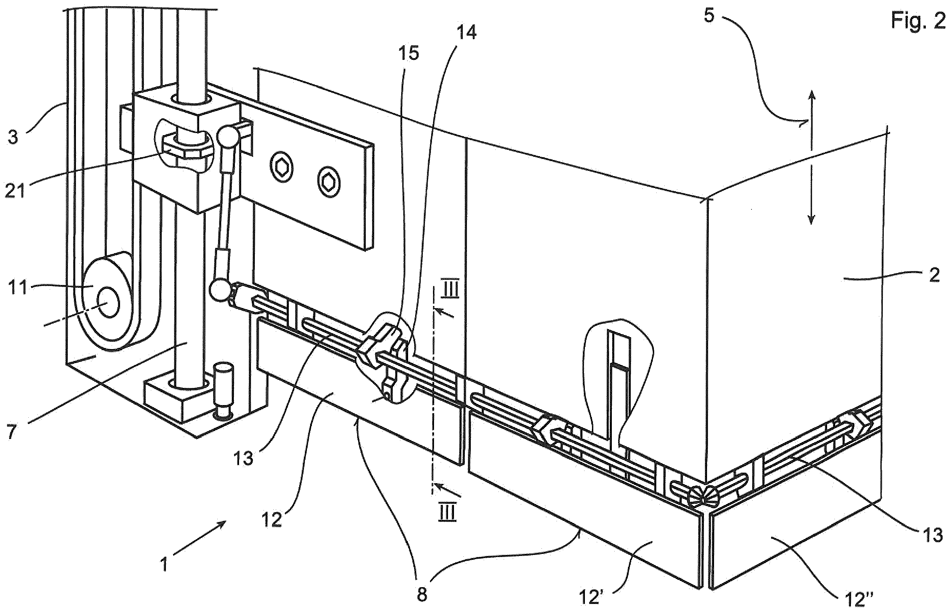

In den Figuren 1, 2 und 3 ist eine Vorrichtung 1 zur Bewegung und Arretierung einer verschiebbaren Tür 2, insbesondere einer vor einer zu sichernden Arbeitsstelle einer Werkzeugmaschine angeordneten Schiebetür, zu entnehmen. Die Tür 2 bewegt sich in der mit der Bezugsziffer 5 gekennzeichneten vertikalen Bewegungs- oder Verstellrichtung 5, um die Arbeitsstelle an der Werkzeugmaschine, an einem Förderband oder einer sonstigen maschinellen Anlage, beispielsweise einem Aufzug, während des Bearbeitungsprozesses nach außen zu verschließen, so dass diese nicht zugänglich und insoweit geschützt ist. Die Tür 2 ist selbstverständlich auch in der Horizontalen oder in einer geneigten Ebene bewegbar.

Zum Be- und Entladen der Arbeitsstelle ist es erforderlich, die Tür 2 entgegen der Verstellrichtung 5 anzuheben bzw. abzusenken. Zu diesem Zweck ist die Tür 2 in zwei C- oder U-förmig ausgestalteten Profilschienen 3 und 4 verschiebbar gehalten, die parallel und beabstandet zueinander ausgerichtet sind.

Desweiteren ist eine Servoeinrichtung 11, beispielsweise in Form eines Elektromotors, vorgesehen, durch die ein Keilriemen angetrieben ist. An dem Keilriemen ist an einer vorgegebenen Position die Vorrichtung 1 angebracht, die somit trieblich mit dem Keilriemen und der Tür 2 verbunden ist. Durch die Rotation des Keilriemens wird demnach die Tür 2 in den Profilschienen 3 und 4 auf und ab bewegt.

Falls während des Schließvorganges der Tür 2, also bei der Bewegung in die Verstellrichtung 5, ein Bedienpersonal unsachgemäß die Arbeitsstelle der Werkzeugmaschine bedient und beispielsweise in diese eingreift, könnte der Arm durch die Bewegung der Tür 2 zwischen diesem und einer Schließkante eingeklemmt und verletzt werden. Aus Sicherheitsgründen ist daher die Tür 2 unmittelbar dann zu stoppen, wenn dieses während der Verstellbewegung nach unten auf ein Hindernis auftrifft. Zu diesem Zweck ist an der Unterkante der Tür 2 eine Kontaktleiste 48 angebracht, die linear nach oben oder nach außen verschwenkbar an der Tür 2 gelagert ist.

Parallel und beabstandet zu einer oder zu beiden Seiten der Profilschienen 3 und 4 ist eine Führungssäule 7 vorgesehen, an der ein mit der Kontaktleiste zusammenwirkendes Sperrglied 21 mit Spiel verläuft.

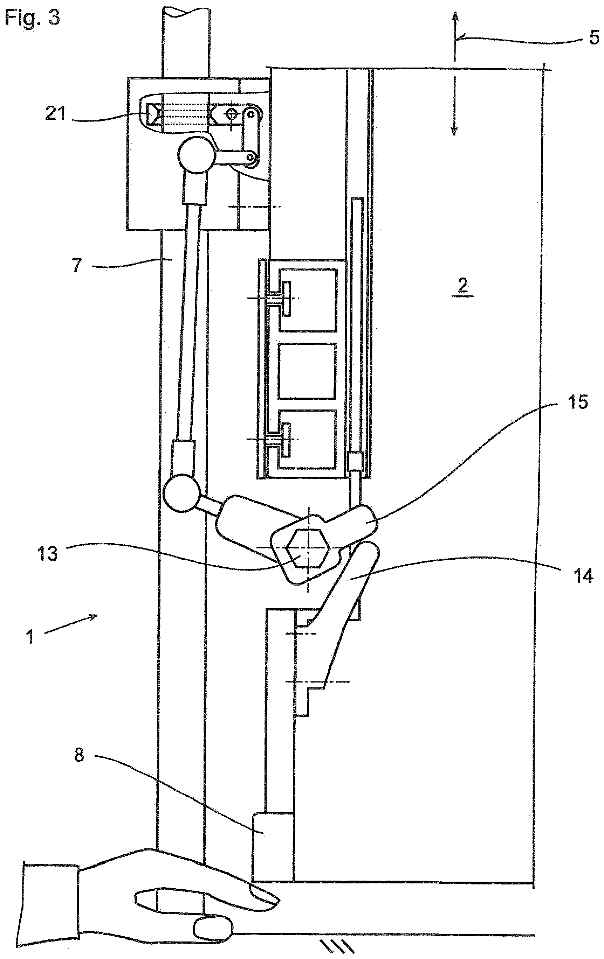

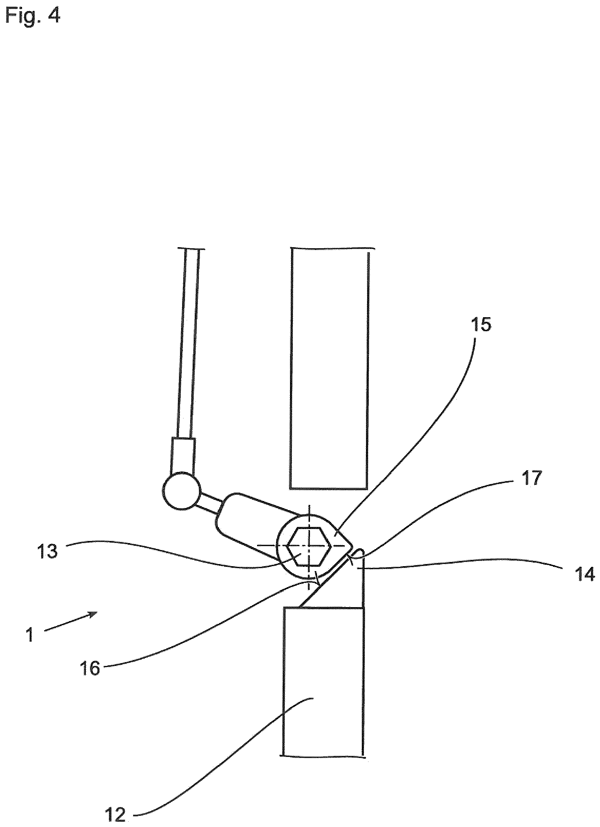

Insbesondere aus den Figuren 3 und 4 ist ersichtlich, dass die Kontaktleiste 8 aus mehreren Teilabschnitten 12 gebildet ist, die räumlich voneinander getrennt sind. Somit ist die durchgehende Kontaktleiste 8 in einzelne Teilabschnitte 12 unterteilt. Jede der Teilabschnitte 12 der Kontaktleiste 8 sind dabei unabhängig voneinander beweglich an der Tür 2 verschwenkbar angelenkt oder linear beweglich gelagert. Gegebenenfalls können die vereinzelten Teilabschnitte 12 auch mittels einer nicht dargestellten Rückholeinrichtung aktiv bei deren Auslösung entgegen der Verstellrichtung 5 bewegt werden.

Darüberhinaus sind die einzelnen Teilabschnitte 12 über einen an diesen angebrachten Nocken 14 trieblich mit einer parallel zu der Unterkante der Tür 2 verlaufenden Welle 13 gekoppelt. An der Welle 13 sind Gegennocken 15 angearbeitet oder angeformt, die im zusammengebauten Zustand fluchtend zu den Nocken 14 der Teilabschnitte 12 verlaufen. Sobald demnach einer der Teilabschnitte 12 in Richtung der Welle 13 bewegt wird, wird diese verdreht.

Die Welle 13 steht dabei in trieblicher Wirkverbindung mit dem Sperrglied 21, das durch die Rotationsbewegung der Welle 13 verschwenkt ist und sich kraftschlüssig mit der Führungssäule verkeilt, so dass die Tür 2 unverzüglich nach dem Auslösen des Sperrglieds 21 an der Führungssäule 7 arretiert ist.

Um die Rotation der Welle 13 in einem möglichst groß bemessenen Winkelbereich zu erreichen, ist jeder der Nocken 14 mit einer Auflagefläche 16 ausgestattet, die in Richtung der Welle 13 geneigt ist. An der jeweiligen Gegennocke 15 ist eine Anlage-fläche 17 angearbeitet, die parallel zu der Auflagefläche 16 der Nocken 14 ausgerichtete ist. Bei der Bewegung der Nocke 14 gleiten demnach die Auflageflächen 16 und 17 relativ zueinander ab und die lineare Bewegung der Nocken 14 ist durch die Gegennocken 15 in eine Rotationsbewegung der Welle 13 umgewandelt.

Durch die Vereinzelung der Kontaktleiste 8 in eine Vielzahl von Teilabschnitten 12 ist zudem erreicht, dass die Trägheitsmasse der Teilabschnitte gegenüber der gesamten Kontaktleiste 8 erheblich reduziert ist. Folglich ist die Beschleunigung jeder der Teilabschnitte 12 wesentlich größer bzw. für diese wird weniger Kraft benötigt. Daher können die Türen 2 nunmehr mit einer sehr hohen Zustellgeschwindigkeit bewegt werden, wodurch sich die Zeitdauer für das Öffnen und vor allen Dingen Schließen der Tür 2 erheblich gegenüber bislang bekannten Lösungen verringern.

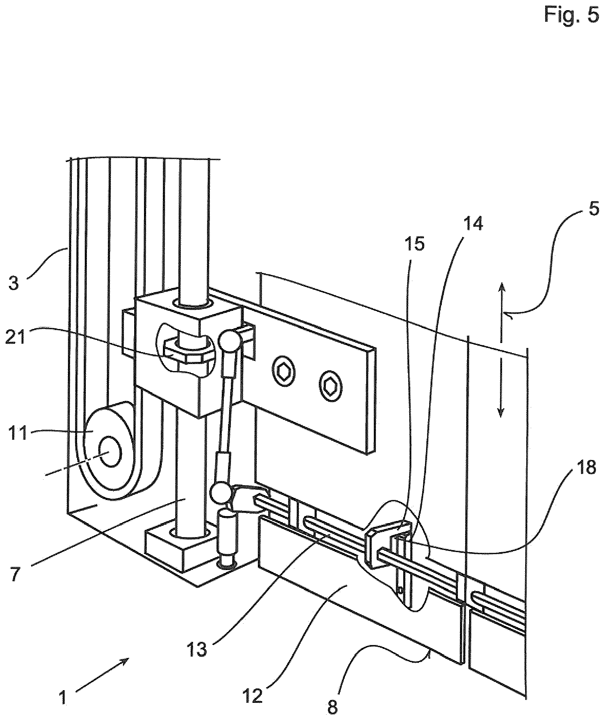

Aus Figur 5 ist ersichtlich, dass die Nocken 14 an den Teilabschnitten 12 der Kontaktleiste 8 sowie die an der Welle 13 abstehenden Gegennocken 15 andersartig ausgeformt bzw. ausgestaltet sind, als in Figur 4 abgebildet. Dabei ist die Hebelgeometrie der Gegennocken 15 derart ausgestaltet, dass in der geschlossenen Position der Schiebetür 2 ein Untergreifen der Teilabschnitte 12 der Kontaktleiste nicht möglich ist, da die Welle 13 durch einen Anschlag 18 festgesetzt ist, so dass eine Rotation der Welle 13 in der Endstellung der Schiebetür 2 nicht mehr möglich ist. Folglich ist auch jeder der Teilabschnitte 12 der Kontaktleiste 8 festgesetzt und kann daher nicht angehoben werden.

## Patentansprüche

1. Vorrichtung (1) zur Bewegung und Arretierung einer Tür (2), insbesondere einer vor einer zu sichernden Arbeitsstelle angeordneten Schutztür, mit mindestens einer Profilschiene (3, 4), durch die die Tür (2) geführt gehalten ist, mit einer die Tür (2) verstellbaren Servoeinrichtung (11), mit einem an der Tür (2) angeordneten und begrenzt verschwenkbar gelagerten Sperrglied (21), das eine parallel zu den Profilschienen (3, 4) verlaufende Führungssäule (7) umgreift, und mit einer an der Unterkante der Tür (2) angeordneten Kontaktleiste, die trieblich mit dem Sperrglied gekoppelt ist und durch die ein selbsttätiges Versperren der Tür (2) an dieser zur Arretierung der Tür (2) bei der Aktivierung der Kontaktleiste (8) erzielbar ist,
**dadurch gekennzeichnet,**
**dass** die Kontaktleiste (8) aus mehreren voneinander räumlich getrennten Teilabschnitten (12) gebildet ist, dass zwischen den Teilabschnitten (12) der Kontaktleiste (8) und dem Sperrglied eine Welle (13) vorgesehen ist, die in kraftschlüssiger oder formschlüssiger Wirkverbindung mit jedem der Teilabschnitte (12) der Kontaktleiste (8) und dem Sperrglied stehen.

2. Vorrichtung (1) nach Anspruch 1,
**dadurch gekennzeichnet,**
**dass** die Welle (13) drehbar an der Tür (2) gelagert ist.

3. Vorrichtung (1) nach Anspruch 1 oder 2,
**dadurch gekennzeichnet,**
**dass** an jedem der Teilabschnitte (12) der Kontaktleiste (8) mindestens ein in Richtung der Welle (13) abstehender Nocken (14) vorgesehen ist, dass an der Welle (13) jeweils fluchtend zu den jeweiligen Nocken (14) der Teilabschnitte (12) der Kontaktleiste (8) ein Gegennocken (15) vorgesehen ist und dass beim Betätigen einer der Teilabschnitte (12) der Kontaktleiste (8) der jeweilige Nocken (14) dieses Teilabschnittes mit dem Gegennocken (15) zusammenwirken, derart, dass die Welle (13) zur Auslösung des Sperrgliedes verdreht ist.

4. Vorrichtung (1) nach einem der vorgenannten Ansprüche,
**dadurch gekennzeichnet,**
**dass** die Nocken (14) der Teilabschnitte (12) der Kontaktleiste (8) und die Gegennocken (15) der Welle (13) relativ zueinander bewegbar sind, bzw. dass beim Betätigen der Kontaktleiste (8) eine Gleitbewegung zwischen den Nocken (14) und den Gegennocken (15) stattfindet.

5. Vorrichtung (1) nach Anspruch 2 oder 4,
**dadurch gekennzeichnet,**
**dass** an den Nocken (14) eine schräge Auflagen-Fläche angearbeitet ist, die in Richtung der Gegennocken (15) abfällt, und dass an den Gegennocken (15) jeweils eine mit den schrägen Auflagen-Flächen der Nocken (14) korrespondierende schräge Anlage-Fläche vorgesehen ist.

6. Vorrichtung (1) nach einem der vorgenannten Ansprüche,
**dadurch gekennzeichnet,**
**dass** jeder der Teilabschnitte (12) der Kontaktleiste (8) einzeln an der Unterkante der Tür (2) linear bewegbar aufgehängt bzw. gelagert ist.

7. Vorrichtung nach einem der vorgenannten Ansprüche,
**dadurch gekennzeichnet,**
**dass** an der Unterseite der Schiebetür (2) ein Anschlag (18) vorgesehen ist, durch den die Welle (13) in der geschlossenen Position der Schiebetür (2) festgesetzt ist.

## Claims

1. A device (1) for moving and fastening a door (2), especially a protective door located in front of a workplace to be protected, with at least one profile rail (3, 4) by means of which the door (2) is held in a guided arrangement, with a servo device (11) for adjusting the door (2), with a locking element (21) arranged on the door (2) swivelling in a restricted arc in which case the servo device (11) reaches around a guide column (7) running parallel to the profile rails (3, 4) and with a contact strip arranged on the bottom edge of the door (2) that is in a driving connection with the locking element and by means of which automatic locking of the door (2) on this contact strip (8) can be achieved for locking of the door (2) when the contact strip (8) is activated,
**characterised in that**,
the contact strip (8) is formed from several spatially separated subsections (12), that a shaft (13) is arranged between the subsections (12) of the contact strip (8) and the locking element and this shaft (13) is in a non-positive or positive active connection with each of the subsections (12) of the contact strip (8) and the locking element..

2. The device (1) in accordance with Claim 1,
**characterised in that**,
the shaft (13) is rotatably mounted on the door (2).

3. The device (1) in accordance with Claim 1 or 2,
**characterised in that**,
at least once cam (14) projecting in the direction of the shaft (13) is provided on each of the subsections (12) of the contact strip (8), that a counter-cam (15) is provided on the shaft (13) flush with each of the corresponding cams (14) of the subsections (12) of the contact strip (8) and that when one of the subsections (12) of the contact strip (8) is actuated the corresponding cam (14) of this subsection interacts with the counter-cam (15) in such a way that the shaft (13) is rotated for triggering the locking element.

4. The device (1) in accordance with one of the aforementioned claims,
**characterised in that**,
the cams (14) of the subsections (12) of the contact strip (8) and the counter-cams (15) of the shaft can move relative to one another or that when the contact strip (8) is actuated, a sliding movement takes place between the cam (14) and the counter-cam (15).

5. The device (1) in accordance with Claim 2 or 4,
**characterised in that**,
a slanted contact surface is worked onto the cam (4) which slopes away in the direction of the counter-cam (15) and that a slanted contact surface is provided on each of the counter-cams (15) corresponding to the sloping contact surfaces of the cams (14).

6. The device (1) in accordance with one of the corresponding claims,
**characterised in that**,
each of the subsections (12) of the contact strip (8) is attached or mounted individually on the bottom edge of the door (2) in a linear movable arrangement.

7. The device in accordance with one of the aforementioned claims,
**characterised in that**,
a stop (18) is provided on the underside of the sliding door (2) by means of which the shaft (13) is secured in the closed position of the sliding door (2).

## Revendications

1. Dispositif (1) destiné au mouvement et au blocage d'une porte (2), en particulier d'une porte de protection à monter devant un poste de travail qui doit être protégé, avec au moins une glissière profilée (3, 4) servant à retenir et à guider la porte (2), avec un servoéquipement (11) déplaçant la porte (2), avec un élément de barrage (21) prévu sur la porte (2) et pivotant dans certaines limites, qui enlace une colonne de guidage (7) s'étendant parallèle aux glissières profilées (3, 4), et avec une réglette de contact (8) disposée sur le bord inférieur de la porte (2) et liée par entraînement avec l'élément de barrage, qui permet le blocage automatique de la porte (2) en vue du barrage de la porte (2) à l'actionnement de la réglette de contact (8),
**caractérisé en ce que**
la réglette de contact (8) consiste en plusieurs sections partielles (12) espacées l'une de l'autre, qu'entre les sections partielles (12) de la réglette de contact (8) et l'élément de barrage (21), il est prévu un arbre en liaison d'actionnement par la forme et la force avec chacune des sections partielles (12) de la réglette de contact (8) et avec l'élément de barrage (21).

2. Dispositif (1) d'après la revendication 1,
**caractérisé en ce que**
l'arbre (13) est logé en rotation sur la porte (2).

3. Dispositif (1) d'après la revendication 1 ou 2,
**caractérisé en ce que**
sur chacune des sections partielles (12) de la réglette de contact (8) il est prévu au moins une came (14) saillant en direction de l'arbre (13), que sur l'arbre (13) il est prévu une came opposée (15) respectivement en alignement précis avec les cames respectives (14) des sections partielles (12) de la réglette de contact (8), et qu'à l'actionnement d'une des sections partielles (12) de la réglette de contact (8), la came respective (14) de cette section partielle collabore avec la came opposée (15) de sorte que l'arbre (13) soit tourné afin de déclencher l'élément de barrage (21).

4. Dispositif (1) d'après une des revendications précédentes,
**caractérisé en ce que**
les cames (14) des sections partielles (12) de la réglette de contact (8) et les cames opposées (15) de l'arbre (13) se laissent déplacer l'un relativement à l'autre ou qu'à l'actionnement de la réglette de contact (8), il y a un mouvement de glissement entre les cames (14) et les cames opposées (15).

5. Dispositif (1) d'après les revendications 2 ou 4,
**caractérisé en ce que**
sur les cames (14) il est pratiqué une surface de portée inclinée en direction des cames opposées (15), et que sur les cames opposées (15), il est prévu respectivement une surface de portée inclinée correspondant aux surfaces de portée inclinées des cames (14).

6. Dispositif (1) d'après une des revendications précédentes,
**caractérisé en ce que**
chacune des sections partielles (12) de la réglette de contact (8) est accrochée ou logée individuellement et avec mobilité linéaire sur le bord inférieur de la porte (2).

7. Dispositif (1) d'après une des revendications précédentes,
**caractérisé en ce que**
sur le bord inférieur de la porte glissante (2), il est prévu une butée (18) qui positionne l'arbre (13) lorsque le porte glissante (2) est fermée.
